# EUROPEAN PATENT APPLICATION

(11) **EP 3 316 657 A1**
(43) Date of publication of application: **02.05.2018**
(21) Application number: 15896173.0
(22) Date of filing: 18.11.2015
(51) Int. Cl.: H04W 84/18

(54) **METHOD AND APPARATUS FOR MANAGING VEHICLES IN A VEHICLE NETWORK**

(30) Priority: 26.06.2015 CN 201510363051
(71) Applicant: ZTE Corporation, Shenzhen, Guangdong 518057 (CN)
(72) Inventor: MA, Zijiang, Shenzhen, Guangdong 518057 (CN); LIU, Hongjun, Shenzhen, Guangdong 518057 (CN); MA, Zhifeng, Shenzhen, Guangdong 518057 (CN); MA, Wei, Shenzhen, Guangdong 518057 (CN); XU, Hui, Shenzhen, Guangdong 518057 (CN); LU, Chen, Shenzhen, Guangdong 518057 (CN)
(74) Representative: Regimbeau
(86) International application number: PCT/CN2015/094945
(87) International publication number: WO 2016/206289

(57) **Abstract**

A method and apparatus for managing vehicles in the IOV are provided. The method includes: acquiring, by a network side equipment, status information of a plurality of vehicles in the IOV; classifying, by the network side equipment, several vehicles the status information of which meets a preset condition into one vehicle group; managing, by the network side equipment, the vehicles as per each vehicle group of the IOV. The method solves the problem in the related art that it is difficult to allocate and release resources for vehicles in the IOV timely, thus filling in the blank in the related art.

## Description

### TECHNICAL FIELD

The present invention relates to the field of communication technology, and in particular to a method and apparatus for managing vehicles in internet of vehicles (IOV).

### BACKGROUND

With the development of wireless multimedia services, requirements on higher data rate and better user experience is growing, thereby requiring the traditional cellular network to have greater capability and coverage. On the other hand, in scenarios such as public security, social network, data sharing at short distance, local advertisement, requirements for Proximity Services (PS), through which a person may know and communicate with neighboring people or things, gradually increase. The traditional cellular network centers on a base station, and is significantly limited in support for high data rate and proximity services. In such a background, Device-to-Device (D2D) technology representing a new development direction of the technology of communications emerges. The application of the D2D technology may reduce the burden of the cellular network and power consumption of a user equipment, enhance data rate and improve the robustness of the network infrastructure, so as to satisfy the requirements of high data rate and proximity services described above.

The D2D technology in the related art may operate in an authorized or unauthorized frequency band, and allows a plurality of user equipments (UE) supporting D2D function (i.e., D2D UE) to discover/communicate directly with or without the network infrastructure.

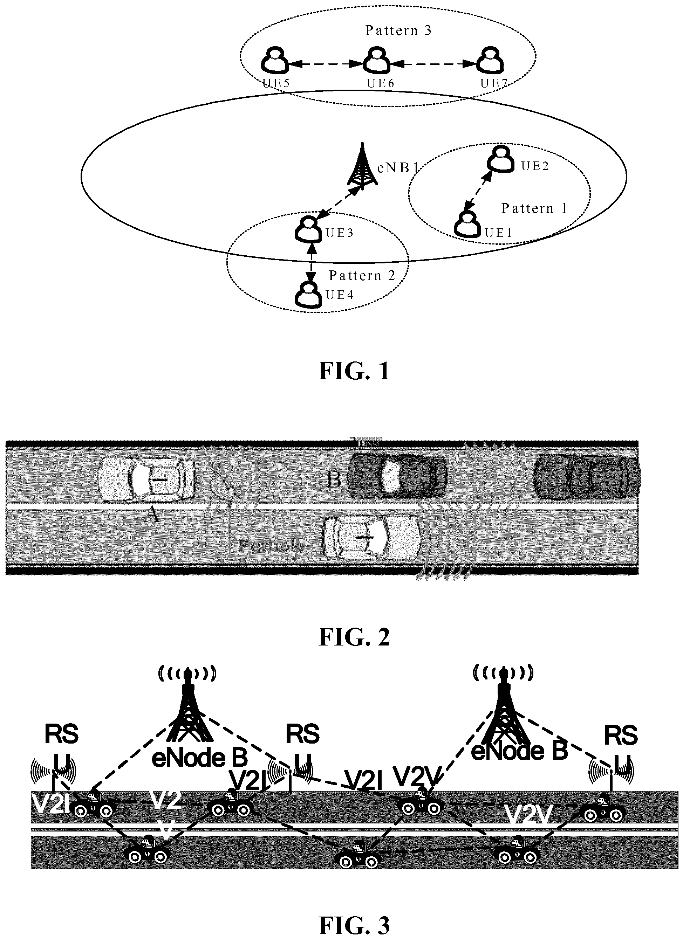

FIG. 1 is a schematic diagram illustrating application scenarios of the D2D technology in the related art. As illustrated in FIG. 1, the D2D technology is mainly implemented in three types of patterns described below. In pattern 1, a data interaction is performed between UE 1 and UE 2 under the coverage of a cellular network, and the user plane data does not pass through the network infrastructure. In pattern 2, the UE in an area with poor coverage/without coverage relays the transmission. In this case, UE 4 with poor signal quality is allowed to communicate with a network via UE 3 covered by the network, thereby facilitating the Operator to expand coverage and increase capability. In pattern 3, UEs can communicate with each other directly when earthquake or emergency occurs and the cellular network malfunctions. In this case, both of the control plane and user plane among UE 5, UE 6 and UE 7 perform a single hopping or multi-hopping data communication without utilizing the network infrastructure.

The D2D technology in the related art includes D2D discovery technology and D2D communication technology. The D2D discovery technology refers to the technology for judging/determining whether a first UE is adjacent to a second UE. A user equipment of the D2D can discover another user equipment of the D2D by transmitting or receiving a discovery signal/information. The D2D communication technology refers to the technology through which the user equipments of the D2D may communicate part or all of the communication data directly without using the network infrastructure.

Based on the characteristics and advantages of the D2D technology described above, it is proposed in the related art to implement applications of Internet of Vehicles (IOV) using wireless cellular communication and D2D technology. The IOV supports the following scenarios for communication: instant messaging and vehicle warning. Vehicle warning may include collision warning, lane-change warning, etc. However, in this scenario, the requirements on delay are very strict, and the existing D2D technology cannot meet the requirements.

During the communication through the IOV, the communication between vehicles, which is also called as Vehicle to Vehicle (V2V) communication, needs to satisfy the requirements of low delay and high reliability in many scenarios. For example, if a distance between two vehicles is too short (that is, vehicle A is too close to vehicle B), it is required to pay attention to driving safety. FIG. 2 is a schematic diagram illustrating vehicular traffic in the related art. As shown in FIG. 2, vehicle B will fail to quickly prevent collision with vehicle A due to a relay in obtaining information about the location/speed of vehicle A if the information about the location/speed of vehicle A is reported to the network by vehicle A and then sent to vehicle B by the network.

FIG. 3 is a schematic diagram illustrating communication through the IOV in the related art. As shown in FIG. 3, during the communication through the IOV, the communication between the vehicle and the network is called as Vehicle to Infrastructure (V2I) communication. The V2I communication is also called as V2R communication, where R refers to a Road Side Unit (RSU). The V2I communication and V2R communication refer to the communication between a vehicle and the network. The network side equipment may be the RSU, an evolved nobe B (eNB), a relay and the like.

Each vehicle supporting the V2V communication needs to obtain a resource necessary for communication (e.g., physical resources such as frequency and time slot of communication) to implement the V2V communication. In the case that the V2V communication adopts the D2D technology defined by the 3GPP, resources necessary for the V2V communication may be obtained through a contention mechanism. For example, a vehicle which obtains the resource first may use the resource first. However, through such mechanism, resource congestion and collision will occur if there are a plenty of vehicles in an area. For example, there is a resource block that has been allocated in advance, and a plurality of vehicles use a same resource. As a result, none of these vehicles is able to use the resource, and information of these vehicles cannot be transmitted. Therefore, in the V2V communication, collision may easily occur if the vehicles obtain resources in the resource pool through a contention mechanism, resulting in that information of these vehicles cannot be sent out timely.

In other words, in the case that there are a plenty of vehicles in one area, the network side equipment may allocate and schedule resources for each of the vehicles to avoid the congestion caused by the resource contention among the vehicles. In this way, the vehicles will not simultaneously use the same resource in the V2V communication, so that information of each vehicle is sent out timely. However, the V2V communication is required in the IOV application scenario related to vehicle safety, and resource collision during the V2V communication of the vehicles in the area with crowded vehicles, is required to be avoided.

In view of the above, the problem of the related art is that, when the network side equipment allocates resources to a plenty of vehicles in an area crowded of vehicles, since the high-speed movement of the vehicles leads to handover between cells, the network fails to allocate and release resources for the vehicles timely. At present, there is no effective solution proposed with respect to the problem described above.

### SUMMARY

The embodiments of the present invention aim to provide a method and apparatus for managing vehicles in the IOV, so as to at least solve the problem in the related art that resources cannot be allocated and released for vehicles in the IOV timely.

According an aspect of embodiments of the present invention, a method for managing vehicles in the IOV is provided. The method includes: acquiring, by a network side equipment, status information of a plurality of vehicles in the IOV; classifying, by the network side equipment, several vehicles the status information of which meets a preset condition into one vehicle group; managing, by the network side equipment, the vehicles as per each vehicle group of the IOV.

Optionally, the status information includes: a distance between the vehicles and current traveling speed of each vehicle of the plurality of vehicles. The classifying, by the network side equipment, several vehicles the status information of which meets a preset condition into one vehicle group includes: classifying, by the network side equipment, following vehicles into one vehicle group: the distance between the vehicles is within a first preset range, and current traveling speed of each vehicle is within a second preset range.

Optionally, the managing, by the network side equipment, the vehicles as per each vehicle group of the IOV includes: transmitting, by the network side equipment, a first instruction for managing the vehicles in the vehicle group to the vehicles in the vehicle group, where the first instruction is used for instructing to modify IOV services of the vehicles in the vehicle group, and/or schedule, release or modify IOV resources.

Optionally, the managing, by the network side equipment, the vehicles as per each vehicle group of the IOV includes: selecting, by the network side equipment, a vehicle head having authority for managing the vehicle group from the vehicle group according to a preset rule; and transmitting, by the network side equipment, a second instruction for managing the vehicles in the vehicle group to the vehicle head. The second instruction is used for instructing the vehicle head to modify IOV services of the vehicles in the vehicle group, and/or schedule, release or modify IOV resources.

Optionally, the status information of the plurality of vehicles in the IOV is acquired through the following manner when there is the vehicle head in the vehicle group: acquiring, by at least one of the network side equipment and the vehicle head, the status information of the plurality of vehicles in the IOV.

Optionally, the network side equipment includes at least one of an evolved node B (eNB), a Relay or a Radio Side Unit (RSU).

According another aspect of embodiments of the present invention, an apparatus for managing vehicles in the IOV is provided. The apparatus includes: an acquisition module configured to acquire status information of a plurality of vehicles in the IOV; a classification module configured to classify several vehicles the status information of which meets a preset condition into one vehicle group; and a management module configured to manage the vehicles as per each vehicle group of the IOV.

Optionally, the status information includes: a distance between the vehicles and current traveling speed of each vehicle of the plurality of vehicles. The classification module is further configured to classify following vehicles into one vehicle group: the distance between the vehicles is within a first preset range, and current traveling speed of each vehicle is within a second preset range.

Optionally, the management module is further configured to transmit a first instruction for managing the vehicles in the vehicle group to the vehicles in the vehicle group. The first instruction is used for instructing to modify IOV services of the vehicles in the vehicle group, and/or schedule, release or modify IOV resources.

Optionally, the management module includes: a selection unit configured to select a vehicle head having authority for managing the vehicle group from the vehicle group according to a preset rule; and a transmitting unit configured to transmit a second instruction for managing the vehicles in the vehicle group to the vehicle head. The second instruction is used for instructing the vehicle head to modify IOV services of the vehicles in the vehicle group, and/or schedule, release or modify IOV resources.

Optionally, the network side equipment includes at least one of the eNB, the Relay or the RSU.

In embodiments of the present invention, after acquiring status information of a plurality of vehicles, the network side equipment classifies several vehicles the status information of which meets a preset condition into a vehicle group and manages the vehicles as per each vehicle group of the IOV. In the embodiments, the vehicles in the IOV are managed in units of group and no longer need to be managed uniformly. This solves the problem in the related art that it is difficult to allocate and release resources for vehicles in IOV timely, thus filling in the blank in the related art.

### BRIEF DESCRIPTION OF DRAWINGS

The accompanying drawings are described herein to provide a further understanding of the present invention and constitute a part of the present application. The exemplary embodiments of the present invention and their descriptions are used for explaining the present invention and not constitute inappropriate limitations of the present invention. Among the accompany drawings:
FIG. 1 is a schematic diagram of an application scenario of the D2D technology in the related art;
FIG. 2 is a schematic diagram of traffic of vehicles in the related art;
FIG. 3 is a schematic diagram of communication of the IOV in the related art;
FIG. 4 is a first flowchart of a method for managing vehicles in the IOV according to an embodiment of the present invention;
FIG. 5 is a structure block diagram of an apparatus for managing vehicles in the IOV according to an embodiment of the present invention;
FIG. 6 is a schematic diagram of the control of a vehicle group by a vehicle head according to an optional embodiment of the present invention.

### DETAILED DESCRIPTION

It should be noted that embodiments of the present application and features thereof may be combined with each other if not conflicted. The present invention will be described below with reference to the accompanying drawings in combination with embodiments.

The background of the embodiments of the present invention is described below. In the related art, based on collision warning systems communicated with each other, a real-time information interaction between vehicles or between the vehicle and the infrastructure at the road side is implemented though advanced wireless cellular communication technology, so as to inform each other of current state and information about road environment, cooperate to sense dangers on road and provide various collision warning information to avoid road traffic accidents. The current state includes the location, speed, acceleration of a vehicle and vehicle routing and so on. However, in the related art, the V2V communication is adopted in application scenarios related to vehicle safety, and the V2V communication may adopt the D2D technology defined by the 3GPP. Each vehicle supporting the V2V communication needs to obtain a resource necessary for communication to implement the V2V communication. In the case that the V2V communication adopts the D2D technology, resources necessary for the V2V communication may be obtained through a contention mechanism. For example, a vehicle which obtains the resource first may use the resource first. However, through such mechanism, resource congestion and collision will occur if there are a plenty of vehicles in an area. Therefore, in the V2V communication, collision may easily occur if the vehicles obtain resources in the resource pool through a contention mechanism, resulting in that information of these vehicles cannot be sent out timely.

The overview of a method for establishing a vehicle group provided in the present embodiment is described below. A vehicle group consists of a plurality of vehicles. The vehicle group may have a vehicle head or not, and has at least one vehicle. The vehicle group may be established by the network side equipment. For example, based on the distance and speed of vehicles under coverage of the network, several vehicles which meet a preset condition regarding the distance and speed are classified into a vehicle group by the network side equipment groups. Optionally, several vehicles may autonomously form a vehicle group. In other words, several vehicles form a vehicle group according to a preset principle (e.g., distance between vehicles/speed of vehicles). Optionally, a certain vehicle head may enroll vehicles adjacent to the vehicle head to form a vehicle group. It is noted that the network side equipment mentioned in the present embodiment may be a node B (eNB), a Relay, or a RSU.

In the present embodiment, a vehicle group is established so that information about traffic safety of the IOV is merely required to be interacted between adjacent vehicles. By establishing such a vehicle group, information interaction between members of the vehicle group is convenient, while a vehicle at distance will not receive the information or will not be interest in the information. It is noted that in the present embodiment, a vehicle may communicate via a vehicle mounted station, or may be regarded as a User Equipment (UE). A vehicle group may be regarded as a UE group. The present invention will be described in detail in combination with accompanying drawings and embodiments of the present invention.

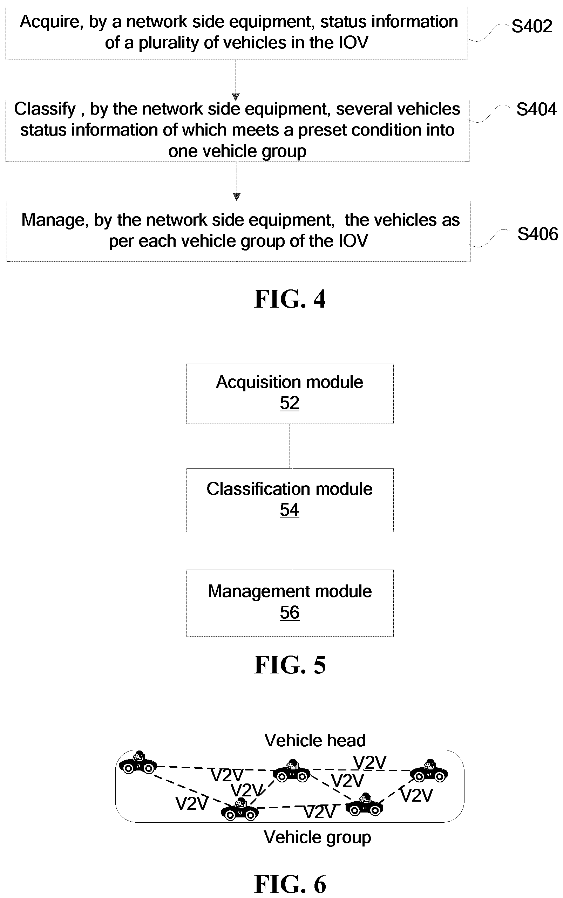

First, the present embodiment provides a method for managing vehicles in the IOV. FIG. 4 is a first flowchart of a method for managing vehicles in the IOV according to an embodiment of the present invention. As illustrated in FIG. 4, the method includes steps described below.

In step S402, status information of a plurality of vehicles in the IOV is acquired by a network side equipment.

In step S404, several vehicles status information of which meets a preset condition are classified into one vehicle group by the network side equipment.

In step S406, the vehicles are managed by the network side equipment as per each vehicle group of the IOV.

Through steps S402-S406 of the embodiment of the present invention, after acquiring the status information of a plurality of vehicles, the network side equipment classifies several vehicles the status information of which meets a preset condition into one vehicle group and manages the vehicles of the IOV as per each vehicle group. That is to say, in the present embodiment, the vehicles in the IOV are managed in units of group and no longer need to be managed uniformly. Therefore, the following problem in the related art is solved: it is difficult to allocate and release resources to vehicles in the IOV timely. Especially, in the case that the vehicle group is outside of the coverage of a cellular network, the network fails to control and manage the vehicles. The method for managing vehicle group proposed in the present embodiment may implement the control and management on vehicles, filling in the blank in the related art.

The status information mentioned in the present embodiment may include: the distance between vehicles and current traveling speed of the vehicles. To be sure, the status information described above is optional and may be other status information such as types of the vehicles.

Based on the two types of status information described above, step S404 of the present embodiment may be implemented in the following manner: vehicles the distance between which is within a first preset range and have the current traveling speed within a second preset range are classified into one vehicle group. The first preset range may be a range from 0 to a preset threshold, e.g., 20 m, and the second preset range is a certain range of a relative speed between members of the vehicle group, e.g., a relative speed between members of the vehicle group of 5 km/h. It is noted that the values of the preset threshold and the relative speed are merely illustrative, and not to limit the present invention. To be sure, the values of the first preset range and the second preset range described above may be adjusted in different environments.

In another optional implementation of the present embodiment, step S406 is implemented in manners described above.

In a first manner, a first instruction for managing the vehicles in the vehicle group is transmitted to the vehicles in the vehicle group by the network side equipment. The first instruction is used for instructing to modify IOV services of the vehicles in the vehicle group, and/or schedule, release or modify IOV resources.

In a second manner, a vehicle head having authority for managing the vehicle group is selected from the vehicle group by the network side equipment according to a preset rule, and then a second instruction for managing the vehicles in the vehicle group is transmitted to the vehicle head by the network side equipment. The second instruction is used for instructing the vehicle head to modify IOV services of the vehicles in the vehicle group, and/or schedule, release or modify IOV resources.

In the second manner, the vehicles in the vehicle group acquire information of the vehicle group and transmit/receive V2V information of other members of the vehicle group, and the vehicles in the vehicle group do not receive and process information transmitted from a vehicle outside the vehicle group. In an application scenario in which there exists a vehicle head, the vehicle head communicates with the network, transmits status information of the vehicles in the vehicle group, receives a control command from the network and provides control and management of the vehicle group.

As can be seen from the first and second manners described above, the management of the vehicles in IOV may be that either the network side equipment or the vehicle head to which management authority has been granted performs management operations. These manners may be used separately or in combination.

Furthermore, through the first manner or the second manner, a vehicle in the vehicle group can learn the vehicle group to which the vehicle belongs and vehicles in the vehicle group. Moreover, through the second manner, an identifier of the vehicle head can be learned. For example, the vehicle in the vehicle group may acquire an identifier of the vehicle group (vehicle group ID), the identifier of each member of the vehicle group (Vehicle ID), and the identifier of the vehicle head (Vehicle head ID) and the like. In subsequent V2V communication, the V2V information, including control information and data content, transmitted from each member of the vehicle group is merely received and processed by other members of the vehicle group (including the vehicle head), and each member of the vehicle group merely receives the V2V information transmitted from other members of the vehicle group (including the vehicle head). Thus, the power consumption of the vehicle and the amount of information processed by the vehicle are reduced.

Through the manner of managing the vehicle group adopted in the present embodiment, a member of the vehicle group may acquire information of the vehicle group; the member of the vehicle group only needs to receive and process the V2V information in the IOV of other members in the vehicle group, and is not necessary to receive and process information transmitted from a vehicle outside of the vehicle group.

Based on the two manners of management operation described above, in another optional implementation of the present embodiment, when there is a vehicle head in the vehicle group, step S402 is performed in the following manner: acquiring status information of a plurality of vehicles in the IOV by the network side equipment and/or the vehicle head.

Furthermore, the network side equipment mentioned in the present embodiment may be selected from the followings: an evolved node B (eNB), a Relay and a RSU.

The present embodiment further provides an apparatus for managing vehicles in the IOV. The apparatus is configured to implement embodiments and optional implementations described above. Those already been described will not be described here. The term "module" as used hereafter can be a combination of software and/or hardware for achieving a predetermined function. While the apparatus described in the embodiment below is preferably implemented in software, but implementations in hardware or a combination of software and hardware are also possible and contemplated.

FIG. 5 is a structure block diagram of an apparatus for managing vehicles in the IOV according to an embodiment of the present invention. As illustrated in FIG. 5, the apparatus includes: an acquisition module 52 configured to acquire status information of a plurality of vehicles in the IOV; a classification module 54 coupled to the acquisition module 52 and configured to classify several vehicles the status information of which meets a preset condition into one vehicle group; and a management module 56 coupled to the classification module 54 and configured to manage the vehicles as per each vehicle group of the IOV.

Optionally, the status information mentioned in the present embodiment includes: the distance between vehicles and current traveling speed of the vehicles. The classification module 54 is further configured to classify the following vehicles into one vehicle group: the distance between the vehicles is within a first preset range, and the current traveling speed of the vehicles is within a second preset range.

It is noted that the status information described above is merely optional and may be other status information such as types of the vehicles.

Furthermore, based on the status information described above, the classification module 54 is further configured to classify the following vehicles into one vehicle group: the distance between the vehicles is within a first preset range, and the current traveling speed of the vehicles is within a second preset range. The first preset range may be a range from 0 to a preset threshold, e.g., 20 m, and the second preset range is a certain range of a relative speed between members of the vehicle group, e.g., a relative speed between members of the vehicle group of 5 km/h. It is noted that the values of the preset threshold and the relative speed are merely illustrative, and not to limit the present invention. To be sure, the values of the first preset range and the second preset range described above may be adjusted in different environments.

Optionally, in the present embodiment, the management module 56 may be applied to the network side equipment or the vehicle head having the management authority in the vehicle group. Thus, when being arranged in the network side equipment, the management module 56 is further configured to transmit a first instruction for managing vehicles in the vehicle group to the vehicle group, and schedule, release or modify IOV services and/or IOV resources of the vehicles according to the first instruction.

On the other hand, when there is a vehicle head having management authority in the vehicle group, the management module 56 further includes: a selection unit configured to select a vehicle head from the vehicle group according to a preset rule, and the vehicle head is authorized to manage the vehicle group; a transmitting unit configured to transmit a second instruction for managing the vehicles in the vehicle group to the vehicle head. The second instruction is used for instructing the vehicle head to modify the IOV services of vehicles in the vehicle group, and/or schedule, release or modify the IOV resources.

The transmitting unit is not necessary to receive and process information transmitted from a vehicle outside of the vehicle group. In an application scenario in which there exists a vehicle head, the vehicle head communicates with the network side equipment, transmits status information of the vehicles in the vehicle group, receives a control command from the network side equipment and provides control and management of the vehicle group. Furthermore, the management of the vehicles in the IOV performed by the selection unit and the transmitting unit may be that the network side equipment or the vehicle head to which management authority has been granted performs management operations. These manners may be used separately or in combination.

Furthermore, though the selection unit and the transmitting unit, a vehicle in the vehicle group can learn the vehicle group to which the vehicle belongs and vehicles in the vehicle group. Moreover, a vehicle in the vehicle group can also learn an identifier of the vehicle head in the second manner. For example, the vehicle may acquire an identifier of the vehicle group (vehicle group ID), the identifier of each member of the vehicle group (Vehicle IDs), and the identifier of the vehicle head (Vehicle head ID) and the like. In subsequent V2V communication, V2V information, including control information and data content, transmitted from each member of the vehicle group is merely received and processed by other members of the vehicle group (including the vehicle head), and each member of the vehicle head only receives V2V information transmitted from other members of the vehicle group (including the vehicle head). Thus, the power consumption of the vehicles and the amount of information processed by the vehicles are reduced.

Optionally, the acquisition module 52 may be arranged based on the different locations of the management module 56. For example, when there is no vehicle head in the vehicle group, the acquisition module 52 may be applied to the network side equipment, and includes: a first acquisition unit configured to acquire the status information of a plurality of vehicles in the IOV. When there is a vehicle head in the vehicle group, the acquisition module 52 may be arranged at the vehicle head of the vehicle group or applied to the network side equipment, and includes: a second acquisition unit configured to acquire the status information of a plurality of vehicles in the IOV.

The present invention will be illustrated in combination with optional implementations of an optional embodiment of the present invention.

FIG. 6 is a schematic diagram of the control of a vehicle group by a vehicle head according to an optional embodiment of the present invention. As illustrated in FIG.6, the vehicle head of the vehicle group refers to a certain vehicle which controls/manages the vehicle group (i.e., UE group head). A vehicle group may have no vehicle head, and the management/control of the vehicle group is thus provided by the network. Under the coverage of the network, the management/control of the vehicle group may be provided by the network side equipment or the vehicle head. However, outside the coverage of the network, the management/control of the vehicle group is provided by the vehicle head.

In the optional embodiment, the control and management of the vehicle group may not include the control and management of services irrelevant to IOV services (e.g., establishment of communication connection and allocation of communication resources required for general session services between a member of the vehicle group and other vehicles), and may not include the management/control of the vehicle group described in the optional embodiment. The range of the management/control of the vehicle group is notified to members of the vehicle group by the network side equipment. Alternatively, the range of the management/control of the vehicle group is a pre-determined range, i.e., it is defined which control and management is within the range of control and management of the vehicle group.

Furthermore, the control and management of the vehicle group in the optional embodiment may also refer to that the network side equipment or the vehicle head provides the control/management related to the IOV (i.e., the vehicle head is a vehicle which provides control/management related to IOV services to the vehicle group), and may not concern the control/management of other services irrelevant to IOV services. The control/management of the vehicle group may include: providing time synchronization information to members of the vehicle group; providing resource allocation and scheduling to each vehicle in the IOV communication and permitting a certain vehicle to leave or join in the vehicle group. It is noted that the manners of the control/management of the vehicle group described above are merely manners commonly used in the embodiment, and not to limit the present invention. Other manners of the control/management are possible. For example, current traveling speed of other members and distance between vehicles are provided to the member of the vehicle group.

In the optional embodiment, the network side equipment may provide and allocated IOV resources, and/or control and manage IOV services, and/or provide wireless access to IOV services.

When the network side equipment is the eNB, Relay or RSU having eNB functions, the vehicle head and the network side equipment communicate in the V2I mode through a Uu interface. The Uu interface is an interface between the eNB and UE in 3GPP. When the network side equipment is a RSU having UE function, the vehicle head and the network side equipment communicate in the V2V mode through a PC5 interface. The PC5 interface is an interface between UEs in related D2D technology in 3GPP.

When there is no vehicle head in the vehicle group, the control/management of the vehicle group is provided by the network side equipment. On the other hand, when there is a vehicle head in the vehicle group, the control/management of the vehicle group is provided by the vehicle head.

Under the coverage of network, the network side equipment may provide management/control of the vehicle group, or instruct a certain member of the vehicle group to be the vehicle head for providing management/control to the vehicle group. In other words, when the network side equipment manages/controls the vehicle group, there is no vehicle head in the vehicle group. If there is a vehicle head in a vehicle group, the vehicle head is responsible to manage/control the vehicle group, and the members of the vehicle group need not to perform IOV-related communication with the network.

The communication between the vehicle head and the network side equipment is used for implementing one or more of the following operations: (1) acquiring/modifying/releasing resources for the vehicle group; (2) reporting status of the vehicle group; (3) receiving and/or transferring a network control command; (4) acquiring/losing the identity of vehicle head. As can be seen from these operations, the control right over the vehicle group may be granted to or revoked from the vehicle head through establishing a communication connection between the vehicle head and the network side equipment, or through information interaction between the vehicle head and the network side equipment. The function that the vehicle head controls V2V communication between vehicles in the vehicle group is implemented based on the control right. The communication between the vehicle head and a member may be used for implementing the following functions: (1) resource allocation and scheduling among members of the vehicle group; (2) management of the vehicle group, such as leaving or joining of members in the vehicle group.

The vehicle head and the network side equipment communicate through the V2I communication and its bearing may be D2D or Uu. The communication between the vehicle head and a member of the vehicle group, as well as the communication between members of the vehicle group, may adopt the V2V communication, i.e., adopting 3GPP D2D transmission mode, which may be D2D unicast transmission mode or D2D multicast transmission mode. In the communication between the vehicle head and the member of the vehicle group, the vehicle head may control/manage a member or some members of the vehicle group in D2D unicast transmission mode. For example, the vehicle head configures a wireless resource required by a certain member of the vehicle group.

In another embodiment, a software for implementing the embodiments and optional implementations described above is provided.

In another embodiment, a storage medium storing the above software is provided. The storage medium includes, but not limited to, CD-ROM, floppy disk, hard disk, EPROM and the like.

Apparently, those skilled in the art shall understand that modules or steps of the present invention described above may be implemented by means of universal computing devices, which may be integrated in a single computing device or distributed among a network consisting of multiple computing devices. Optionally, the modules or steps may be implemented by program codes which are executable by a computing device; hence, the program codes may be stored in a storage device and executed by a computing device. In some cases, the illustrated or described steps may be performed in an order different from that described herein; the modules or steps may be embodied by respective integrated circuit modules, or some of them may be embodied by a single integrated circuit module. The present invention is not limited to any specific combination of hardware and software.

The above description is merely optional embodiments of the present invention and not to limit the present invention. For those skilled in the art, the present invention may have various modifications and alterations. All of the modifications, equivalents and improvements within the scope and principle of the present invention are intended to fall within the scope of the present invention.

### INDUSTRIAL APPLICABILITY

In embodiments of the present invention, after acquiring status information of a plurality of vehicles, the network side equipment classifies several vehicles the status information of which meets a preset condition into a vehicle group, and manages the vehicles as per each vehicle group of the IOV. In the embodiments, the vehicles in the IOV are managed in units of group and no longer need to be managed uniformly. This solves the following problem in the related art and fills in the blank in the related art: it is difficult to allocate and release resources for vehicles in IOV timely.

## Claims

1. A method for managing vehicles in Internet of Vehicles, IOV, comprising:
acquiring, by a network side equipment, status information of a plurality of vehicles in the IOV;
classifying, by the network side equipment, several vehicles the status information of which meets a preset condition into one vehicle group; and
managing, by the network side equipment, the vehicles as per each vehicle group of the IOV.

2. The method according to claim 1, wherein the status information comprises a distance between the vehicles and current traveling speed of each of the plurality of vehicles;
the classifying, by the network side equipment, several vehicles the status information of which meets a preset condition into one vehicle group comprises:
classifying, by the network side equipment, following vehicles into one vehicle group: the distance between the vehicles is within a first preset range and current traveling speed of each vehicle is within a second preset range.

3. The method according to claim 1, wherein the managing, by the network side equipment, the vehicles as per each vehicle group of the IOV comprises:
transmitting, by the network side equipment, a first instruction for managing the vehicles in the vehicle group to the vehicles in the vehicle group, wherein the first instruction is used for instructing to modify IOV services of the vehicles in the vehicle group, and/or schedule, release or modify IOV resources.

4. The method according to claim 1, wherein the managing, by the network side equipment, the vehicles as per each vehicle group of the IOV comprises:
selecting, by the network side equipment, a vehicle head having authority for managing the vehicle group from the vehicle group according to a preset rule; and
transmitting, by the network side equipment, a second instruction for managing the vehicles in the vehicle group to the vehicle head, wherein the second instruction is used for instructing the vehicle head to modify IOV services of the vehicles in the vehicle group, and/or schedule, release or modify IOV resources.

5. The method according to claim 4, wherein the status information of the plurality of vehicles in the IOV is acquired through the following manner when there is the vehicle head in the vehicle group:
acquiring, by at least one of the network side equipment and the vehicle head, the status information of the plurality of vehicles in the IOV.

6. The method according to claim 5, wherein the network side equipment comprises at least one of an evolved node B, eNB, a Relay or a Radio Side Unit, RSU.

7. An apparatus for managing vehicles in Internet of Vehicles (IOV), wherein the apparatus is applied to a network side equipment and comprises:
an acquisition module configured to acquire status information of a plurality of vehicles in the IOV;
a classification module configured to classify several vehicles the status information of which meets a preset condition into one vehicle group; and
a management module configured to manage the vehicles as per each vehicle group of the IOV.

8. The apparatus according to claim 7, wherein the status information comprises a distance between the vehicles and current traveling speed of each of the plurality of vehicles, wherein
the classification module is further configured to classify following vehicles into one vehicle group: the distance between the vehicles is within a first preset range, and current traveling speed of each vehicle is within a second preset range.

9. The apparatus according to claim 7, wherein the management module is further configured to transmit a first instruction for managing the vehicles in the vehicle group to the vehicles in the vehicle group, wherein the first instruction is used for instructing to modify IOV services of the vehicles in the vehicle group, and/or schedule, release or modify IOV resources.

10. The apparatus according to claim 7, wherein the management module comprises:
a selection unit configured to select a vehicle head having authority for managing the vehicle group from the vehicle group according to a preset rule; and
a transmitting unit configured to transmit a second instruction for managing the vehicles in the vehicle group to the vehicle head, wherein the second instruction is used for instructing the vehicle head to modify IOV services of the vehicles in the vehicle group, and/or schedule, release or modify IOV resources.

11. The apparatus according to claim 7, wherein the network side equipment comprises at least one of an evolved node B, eNB, a Relay or a Radio Side Unit, RSU.
